# EUROPEAN PATENT SPECIFICATION

(11) **EP 0 832 161 B1**
(45) Date of publication and mention of the grant of the patent: **13.10.1999**
(21) Application number: 96917591.8
(22) Date of filing: 10.06.1996
(51) Int. Cl.: C08L 95/00, C08J 3/22, E01C 19/10

(54) **BITUMINOUS COATED MATERIALS**
BITUMINÖSES MISCHGUT
MATERIAUX A REVETEMENT BITUMINEUX

(30) Priority: 09.06.1995 GB 9511698
(43) Date of publication of application: 01.04.1998
(73) Proprietor: Tarmac Heavy Building Materials UK Limited, Ettingshall, Wolverhampton WV4 6JP (GB)
(72) Inventor: ROBINSON, Howard, Lloyd, Near Bridgnorth, Shropshire WV16 6NJ (GB)
(74) Representative: Szczuka, Jan Tymoteusz
(86) International application number: GB9601397
(87) International publication number: WO9641839

(56) References cited:
- EP-A- 0 524 031
- EP-A- 0 545 740
- EP-A- 0 552 574

## Description

The present invention relates to the production of storable bituminous coated materials suitable for use as footpath and carriageway materials, in both surface and base layers.

A number of different processes have been proposed in the past for the production of bituminous coated materials which have a reasonable storage life i.e. remain workable for several days, but can also bear traffic within a short time, usually a few hours, after laying down and compacting. A significant problem with previously proposed material of this kind, though, has been that they do not develop full strength and stiffness for a very long time (measured in years) - if at all. Other materials that have previously been produced suffer from certain defects in performance e.g. reduced elastic stiffness leading to inadequate traffic bearing performance (i.e. susceptible to deformation), when compared to conventional 'hot mix' materials e.g. macadams complying with BS 4987 Part 1: 1993 and the HAUC Code of Practice Specification for the Reinstatement of Openings in Highways, A Code of Practice, Appendix A.10, Table A10.2 - Highway Authorities & Utilities Committee (HAUC).

EP-A-0 524 031 discloses a cold coating process of producing a bituminous coated material using two bitumen emulsions, neither of which is a hard grade bitumen. The non-use of a hard grade bitumen leads to problems such as non-suitability for use in carriage-ways and poor durability on roads with high traffic levels. EP-A-0552574 discloses a two-step process of producing a bituminous coated material in which the use of a hard grade bitumen and the use of flux oil is optional. There is no reference to the use of a hard grade bitumen in both the hot coating and the cold coating stages. Additionally, no mention is made of the importance of the use in the second stage of the process of a slow-breaking emulsion. The bitumen coated material provided by the method of EP-A-0552574 has the disadvantage that it produces a material which is generally too soft for use on roads with heavy volumes of traffic.

It is an object of the present invention to avoid or minimise one or more of the above disadvantages.

The present invention provides a method of producing a storable bituminous coated material suitable for use as footpath and/or carriageway material in a wearing course, basecourse and/or roadbase, which method comprises the steps of:
providing separate bodies of coarse and fine aggregate particles having a particle size substantially in the range from 3.35 mm to 28 mm diameter and a particle size less than 3.35 mm diameter, respectively; mixing at least one of the bodies of coarse and fine aggregate particles with hot bitumen or bitumen emulsion, in which the bitumen is a hard grade bitumen and is substantially free of flux oils, so as to produce aggregate particles coated with hard grade bitumen, wherein the bitumen is a hard grade bitumen which has a penetration grade in the range from 15 to 450 pen; and then mixing together with the bodies of coarse and fine aggregate particles, in the substantial absence of soft grade bitumen, with a slow breaking bitumen emulsion with a high break index greater than 120, and in which the bitumen is substantially free of flux oils wherein the break index is a Quartz Filler Index as defined in DIN 52047.

As used herein the expression "hard grade bitumen" indicates a bitumen which has a high viscosity and resistance to penetration and is substantially free of viscosity reducing components such as flux oils, and is distinguished from "soft grade" bitumen which includes such a viscosity reducing component (usually in order to increase and/or prolong the workability of the bitumen). Such bitumens are sometimes referred to as "straight run" or "penetration grade" bitumen and have a penetration grade in the range from 15 to 450 pen, preferably from 50 to 300 pen, most preferably 100 to 200 pen. In general such bitumens typically have viscosities in the range from 700 to 20,000 centistokes (cSt) measured using a suitable Kinematic Viscometer at a test temperature of 100°C

As indicated above it is important that the bitumen should be substantially free of viscosity reducing components such as flux oils. The bitumen may nevertheless include other components for modifying its other properties e.g. elasticity, without significantly reducing its viscosity. In particular there may be used so-called polymer modified bitumen (PMB) which generally comprises "straight run" or "penetration grade" bitumen in intimate admixture with a suitable polymer. Various polymer modified bitumens are well known in the art and suitable polymers include one or more of the following: ethyl vinyl acetate (EVA) copolymer using any of a wide range of vinyl components; styrene butadiene styrene (SBS) or styrene iso-butylene styrene (SIS), or styrene ethylene butadiene styrene (SEBS), linear and/or branched, block copolymers; styrene butadiene rubber (SBR) latex; Atactic Polypropylene (APP); natural or synthetic rubber (crumb or latex form); polybutadiene (Bd); derivatives of Methyl Methacrylates (Acrylics); etc.

The amount of polymer included in the bitumen may be varied within wide limits depending on inter alia the increase in elasticity and associated improvement in durability, required and cost thereof. In general there is used from 1 to 10% w/w of the polymer modifier, preferably from 3 to 5% w/w. It will be appreciated that the polymer additive generally increases the final hardness of the modified bitumen. Accordingly where a particular degree of final hardness is required, say 50 pen, then it will be necessary to use a somewhat less hard grade of bitumen, say 100 pen, to which the polymer is added, which should nevertheless be substantially free of viscosity modifiers such as flux oils.

With the method of the present invention there is provided a bituminous coated material which can be stored typically for from 7 to 14 days while remaining substantially workable, and when laid and compacted will develop a high degree of stiffness comparable with that of traditional, non-storable, hot bitumen coated macadam products, certainly within 2 years, generally within 1 to 6 months, and usually within 3 months of laying and compacting.

The hot bitumen or emulsion coating of the aggregate may be applied to either or to both of separate (uncoated) fine and coarse aggregates. Pre-coated aggregates are then stored at ambient temperature, usually in a stockpile, and allowed to equilibrate with ambient temperature. Moreover it is possible for one fraction to be coated using hot bitumen and the other using bitumen emulsion.

In general it is preferred that the application of the hard bitumen coating to the coarse and/or fine aggregate particles be effected by mixing hot bitumen with hot aggregate, in a generally conventional manner, usually at temperatures in the range 150 to 180°C, in order to secure good adhesion and binding of the bitumen coating to the aggregate particles. Where bitumen emulsion is used to coat the aggregate particles it is important that there should be used an emulsion which is not too reactive and does not break too quickly resulting in preferential binding to smaller aggregate particles leaving larger ones uncoated. It should be borne in mind that the coated aggregate particles cannot be used in the final mixing stage until this emulsion has broken and the bitumen becomes bound to the aggregate particles. It is important that the bitumen should be well bound to the aggregate particles in order to avoid stripping thereof from the aggregate particles upon compaction of the bituminous coated material when it has been laid.

Various bitumen emulsions suitable for use in coating of the coarse aggregate particles are known in the art and are readily available including commercially available types such as K 140, K 160, K 170 and K 360 (where K indicates a cationic emulsion; the first digit indicates reactivity and speed of breaking with 1 quick, and 3 slow; and the remaining two digits indicate the percentage content of bitumen). In general a slower breaking emulsion is required for pre-coating fine aggregate particles and a faster one for pre-coating coarse aggregate particles.

In accordance with the present invention there is used a slowbreaking emulsion in the final mixing. The speed of breaking of a bitumen emulsion is conveniently expressed in terms of a "Break Index" such as the Quartz Filler Index defined under International Standard DIN 52047. This is determined by progressively adding quartz powder, with mixing, to a 100g sample of the emulsion, the break index being given by the (minimum) number of g of quartz powder added to obtain breaking of the emulsion. Conventional bitumen emulsions such as K 170 and K 360 typically have break indexes of 80 and 120 respectively and can be used to coat coarse aggregate particles, breaking within a few hours in the case of K 170 and in under 1 day in the case of the slower K 360. Such emulsions break too quickly to be suitable for use in coating fine aggregate particles or for use in the final mixing. To coat the fine particles and for the final mixing stage requires a slow breaking emulsion having a high break index substantially greater than 120, preferably at least 140, for example in the range from 160 to 180.

In general bitumen emulsions comprise around 40 to 70%, preferably 55 to 65%, w/w of bitumen and 60 to 30%, preferably 45 to 35%, w/w aqueous phase, (said percentages excluding the emulsifier component), and an emulsifier. In accordance with the present invention there is used an emulsifier which provides a highly stable, slow breaking, bitumen emulsion having a high breaking index as indicated above. A suitable emulsifier that may be mentioned is that available from AKZO NOBEL Ltd. of Littleborough, UK under the name Redicote EN4868 or C629. The amount of emulsifier used will depend on inter alia the amount and grade of bitumen used but typically could be around 1.0% w/w in the emulsion.

In other respects the slow-breaking bitumen emulsion used in accordance with the present invention is generally conventional and the aqueous phase will normally contain salt(s) such as calcium chloride to avoid swelling of the bitumen droplets thus maintaining emulsion stability, and the pH may be adjusted (e.g. by adding an acid such as HCl) in order to maintain optimum performance of the emulsifier. Thus, for example, where the emulsifier is Redicote EN 4868 there may be present around 0.2% w/w of HCl in the emulsion to provide a pH less than 7.0 and typically between 4.0 and 2.0. A suitable amount of salt is around 0.1% w/w of calcium chloride, in the emulsion. Thickening agents may also be present in the emulsion's aqueous phase in order to increase 'bitumen' film thickness on the aggregate particles to enhance durability. Typical thickeners are based on Hydroxy Ethyl Cellulose and its derivatives. One example is V100 available from CECA, France.

The amount of bitumen emulsion used is generally chosen so as to provide a bitumen content in the final bituminous coated material mix of from 3% to 9% preferably from 5% to 7% w/w. Using a bitumen emulsion containing around 60 to 65% of bitumen, there is generally used around 4 to 8%, preferably from 5 to 7%, w/w of the emulsion relative to the final mix.

In a preferred aspect the present invention provides a method of producing a storable bituminous coated material suitable for use as a footpath and for carriageway material, which method comprises the steps of:
coating a coarse aggregate fraction with hot bitumen of a hard grade and allowing the bitumen coated coarse aggregate to cool;
coating a fine aggregate fraction with hot bitumen of a hard grade and allowing the bitumen coated fine aggregate to cool; and
mixing the bitumen coated coarse and fine aggregates with a bitumen emulsion based on a hard grade bitumen.

As used herein the expression "coarse aggregate" generally indicates an aggregate having a particle size substantially within a range of from 3.35 mm to 28 mm diameter, and "fine aggregate" generally indicates an aggregate having a particle size less than 3.35 mm, usually from 3.35 to 0.001 mm, diameter.

It will be understood that the relative proportions of the coarse and fine aggregates can be varied. Nevertheless it is important that their proportions are more or less carefully controlled in order to obtain a suitable void space within the laid and compacted material, which should generally be in the range from 4 to 16% v/v when the bitumen content is restricted more or less to that sufficient for binding the aggregate. In general for wearing course macadams the coarse fraction will constitute from 50 to 70% of the total aggregate, preferably there is used from 60 to 55% of coarse aggregate with from 40 to 45% of fine aggregate. The ratios of coarse to fine aggregates will vary for basecourse and roadbase layers as indicated in BS 4987.

The amount of bitumen used for pre-coating the aggregate particles is generally selected so as to be sufficient for substantially coating the exposed surface of the particles but not so great as to cause substantial bonding between particles in the stockpile during storage resulting in loss of workability of the mass of coated aggregate particles. In practice there will generally be used from 0.1 to 3, advantageously from 1 to 2%, preferably around 1.5%, w/w of bitumen with the coarse aggregate and from 0.1 to 5, advantageously from 1 to 3.0%, preferably around 2.5%, w/w of bitumen with the fine aggregate.

The amount of bitumen and bitumen emulsion in the final mix is generally chosen so as to be sufficient to bind the aggregate particles together, without however excessively reducing void volume and stiffness of the laid and compacted material.

The amount of bitumen in the final mix will of course depend on the amount used in pre-coating of the aggregate particles together with the amount of slow breaking bitumen emulsion used in the final mix. As already noted the amount of bitumen and or emulsion used with each of the coarse and fine fractions can be varied considerably, as can the relative amount of the two fractions. The bitumen content of the slow breaking emulsion for the final mix can also be varied. Thus the amount of bitumen emulsion required will also vary correspondingly for any given required final mix bitumen content. The latter can vary typically from 3 to 8% w/w depending upon inter alia the application with, for example, lower contents being preferred for roadbase and higher contents being preferred for wearing course.

Further preferred features and advantages of the invention will appear from the following detailed examples given by way of illustration.

### Example 1 - Preparation of Macadam Wearing Course

Hot coarse aggregate (1200 kg, granite, Gritstone, Slag, Limestone or Basalt) chippings having a nominal particle size of 6mm was mixed with hot molten bitumen (18 kg) at a temperature of 150 to to 180°C in a conventional batch plant mixer for less than 1 minute to provide a fully bitumen coated material containing approximately 1.5% w/w of bitumen. The bitumen used was a straight run grade bitumen having a penetration grade of 200 and a typical viscosity of 85 cST at 160°C. The bitumen was obtained from Lindsey Oil Refinery of Immingham, Humberside and was a straight run penetration grade with no added flux oil. The coated aggregate was allowed to cool by storing at ambient temperature for typically 1 to 4 days prior to use.

Hot fine aggregate (800 kg, Limestone, Gritstone, Basalt, Slag or Granite having a particle size of 0 to 3.35 mm was mixed with hot molten bitumen (20kg) as before to provide a fully coated material containing approximately 2.5% w/w of bitumen. It was then stored at ambient temperature to cool for 1 to 4 days prior to use.

Coated coarse aggregate (1200 kg) and coated fine aggregate (800 kg) were then placed together in a conventional continuous of batch plant. Hard bitumen emulsion (143 kg) was added in while stirring the whole mass at ambient temperature (10°C) for 1 to 2 minutes. The resulting bituminous coated material was then stored in a stockpile for 14 days, prior to delivery to site for laying and compaction.

The emulsion used had the following composition:

| | % w/w |
|---|---|
| Hard bitumen (200 pen) | 65.0 |
| Emulsifier (Redicote EN 4868) | 1.1 |
| pH adjustment (HCl) | 0.2 |
| Stabilizer (CaCl₂) | 0.1 |
| Water to 100% | |

### Example 2 - Use of Macadam

The Macadam of Example 1 was laid to a depth of 65 mm (i.e. 30% surcharge) over a basecourse layer (laid using a cold mix macadam) and compacted using a Vibrating Plate (e.g. Wacker Plate) to a thickness of 50 mm. After three months the resulting compacted material stiffness was then assessed by removing core samples and testing in accordance with BSI draft for development DD213:1993 using the Nottingham Asphalt Tester (NAT). The average stiffness Modulus (6 cores) for the 6 mm dense macadam at 3 months age was measured at 614 MPa. Table A10.2 in the HAUC Specification defines the minimum Elastic Stiffness for a 6 mm nominal size wearing course including a 200 penetration bitumen as 600 MPa. Hence the cold lay material according to the present invention demonstrated an Elastic Stiffness equivalent to that of a conventional hot mix material. In contrast a conventional "Storage grade" macadam, manufactured using a combination of graded aggregate and 'fluxed' bitumen would show typical stiffness values of below 100 MPa which is not acceptable for carriageways and would have its field of application limited to footpaths only for use as permanent trench reinstatement materials i.e. conventional 'fluxed' or cut-back macadams made using fluxed bitumens or fluxed bitumen emulsions are not suitable to be used for trench reinstatements in carriageways, being only acceptable for footpaths.

## Claims

1. A method of producing a storable bituminous coated material suitable for use as footpath and/or carriageway material in a wearing course, basecourse and/or roadbase, which method comprises the steps of:
providing separate bodies of coarse and fine aggregate particles having a particle size substantially in the range from 3.35 mm to 28 mm diameter and a particle size less than 3.35 mm diameter, respectively;
mixing at least one of the bodies of coarse and fine aggregate particles with hot bitumen or bitumen emulsion, in which the bitumen is a hard grade bitumen and is substantially free of flux oils, so as to produce aggregate particles coated with hard grade bitumen, wherein the bitumen is a hard grade bitumen which has a penetration grade in the range from 15 to 450 pen; and
then mixing together with the bodies of coarse and fine aggregate particles, in the substantial absence of soft grade bitumen, with a slow breaking bitumen emulsion with a high break index greater than 120 wherein the break index is a Quartz Filler Index as defined in DIN 52047, and in which the bitumen is a hard grade bitumen and is substantially free of flux oils.

2. A method according to claim 1 wherein the or each said hard grade bitumen has a penetration grade in the range from 50 to 300 pen.

3. A method according to either of claims 1 of 2 wherein each of the bitumen components is substantially free of viscosity reducing components.

4. A method according to any one of claims 1 to 3 wherein at least one of the bitumen components includes a modifier which does not substantially reduce the viscosity of the bitumen.

5. A method according to claim 4 wherein said at least one of the bitumen components is a polymer modified bitumen.

6. A method according to claim 4 wherein is used a modifier wich modifies the elasticity of the bituminous coated material without significantly reducing the viscosity of said bituminous coated material.

7. A method according to claim 6 wherein the modifier is natural or synthetic rubber.

8. A method according to any one of claims 1 to 7 wherein at least one of the bodies of coarse aggregate particles and fine aggregate particles is coated by mixing with hot bitumen.

9. A method according to claim 8 wherein both of the bodies of coarse aggregate particles and fine aggregate particles is coated by mixing with hot bitumen.

10. A method according to claim 9 wherein said slow breaking bitumen emulsion has a break index greater than 140.

11. A method according to claim 10 wherein said slow breaking bitumen emulsion has a break index of from 160 to 180.

12. A method according to any one of claims 1 to 11 wherein is used from 3 to 9% w/w of the slow breaking bitumen emulsion in the final mix.

13. A method according to claim 12 wherein is used from 4 to 8% w/w of a bitumen emulsion which contains around 60 to 65% w/w of bitumen.

## Patentansprüche

1. Verfahren zur Herstellung eines lagerfähigen bitumenbeschichteten Materials, das sich zur Verwendung als Bürgersteig- und/oder Fahrbahnmaterial in einer Verschleißschicht, einem Unterbau (Tragschicht) oder einer oberen Tragschicht eignet, wobei das Verfahren die folgenden Schritte aufweist:
Bereitstellen getrennter Körper aus Grob- und Feinzuschlagteilchen mit einer Teilchengröße im wesentlichen im Bereich von 3,35 mm bis 28 mm Durchmesser bzw. einer Teilchengröße von weniger als 3,35 mm Durchmesser;
Vermischen mindestens eines der Körper aus Grob- und Feinzuschlagteilchen mit heißem Bitumen oder Bitumenemulsion, wobei das Bitumen ein Hartbitumen und weitgehend frei von Stellölen ist, um mit Hartbitumen beschichtete Zuschlagteilchen herzustellen, wobei das Bitumen ein Hartbitumen mit einem Durchdringungsgrad im Bereich von 15 bis 450 pen ist; und
anschließendes gemeinsames Vermischen der Körper aus Grob- und Feinzuschlagteilchen, unter weitgehender Abwesenheit von Weichbitumen, mit einer langsam entmischenden Bitumenemulsion mit hohem Entmischungsindex von mehr als 120, wobei der Entmischungsindex ein Quarzfüllstoffindex entsprechend der Definition in DIN 52047 ist, und wobei das Bitumen ein Hartbitumen und weitgehend frei von Stellölen ist.

2. Verfahren nach Anspruch 1, wobei das oder jedes Hartbitumen einen Durchdringungsgrad im Bereich von 50 bis 300 pen aufweist.

3. Verfahren nach einem der Ansprüche 1 oder 2, wobei jede der Bitumenkomponenten im wesentlichen frei von viskositätsmindernden Komponenten ist.

4. Verfahren nach einem der Ansprüche 1 bis 3, wobei mindestens eine der Bitumenkomponenten einen Modifikator aufweist, der die Viskosität des Bitumens nicht wesentlich vermindert.

5. Verfahren nach Anspruch 4, wobei die mindestens eine Bitumenkomponente ein polymermodifiziertes Bitumen ist.

6. Verfahren nach Anspruch 4, wobei ein Modifikator verwendet wird, der die Elastizität des bitumenbeschichteten Materials modifiziert, ohne die Viskosität des bitumenbeschichteten Materials wesentlich zu vermindern.

7. Verfahren nach Anspruch 6, wobei der Modifikator natürlicher oder synthetischer Kautschuk ist.

8. Verfahren nach einem der Ansprüche 1 bis 7, wobei mindestens einer der Körper aus Grobzuschlagteilchen und Feinzuschlagteilchen durch Mischen mit heißem Bitumen beschichtet wird.

9. Verfahren nach Anspruch 8, wobei beide Körper aus Grobzuschlagteilchen und Feinzuschlagteilchen durch Mischen mit heißem Bitumen beschichtet werden.

10. Verfahren nach Anspruch 9, wobei die langsam entmischende Bitumenemulsion einen Entmischungsindex von mehr als 140 aufweist.

11. Verfahren nach Anspruch 10, wobei die langsam entmischende Bitumenemulsion einen Entmischungsindex von 160 bis 180 aufweist.

12. Verfahren nach einem der Ansprüche 1 bis 11, wobei im fertigen Gemisch 3 bis 9 Gew.-% der langsam entmischenden Bitumenemulsion verwendet werden.

13. Verfahren nach Anspruch 12, wobei 4 bis 8 Gew.-% einer Bitumenemulsion verwendet werden, die 60 bis 65 Gew.-% Bitumen enthält.

## Revendications

1. Procédé de fabrication d'un matériau à revêtement bitumeux stockable apte à être utilisé comme matériau d'allées piétonnes et/ou de chaussées, dans une couche d'usure, une couche de base et/ou une couche de fondation, lequel procédé comprend les étapes consistant à:
prévoir des corps distincts de particules d'agrégats grossier et fin ayant respectivement une taille de particule sensiblement dans la plage allant de 3,35 mm à 28 mm de diamètre et une taille de particule inférieure à 3,35 mm de diamètre;
mélanger au moins un des corps de particules d'agrégats grossier et fin à du bitume chaud ou à une émulsion bitumeuse, dans laquelle le bitume est un bitume dur et est pratiquement dépourvu d'huiles de fluxage, de façon à produire des particules d'agrégats revêtues d'un bitume dur, le bitume étant un bitume dur qui a un degré de pénétration situé dans la plage allant de 15 à 450 en tant qu'indice de pénétration (pen); et
mélanger ensuite ensemble les corps de particules d'agrégats grossier et fin, pratiquement en l'absence de bitume souple, à une émulsion bitumeuse à rupture lente dotée d'un indice de rupture élevé supérieur à 120, l'indice de rupture étant un indice de charge à base de quartz défini dans la DIN 52047, et dans laquelle le bitume est un bitume dur et est pratiquement dépourvu d'huiles de fluxage.

2. Procédé selon la revendication 1, dans lequel le ou chaque dit bitume dur a un degré de pénétration situé dans la plage allant de 50 à 300 en tant qu'indice de pénétration.

3. Procédé selon l'une ou l'autre des revendications 1 et 2, dans lequel chacun des composants du bitume est pratiquement dépourvu de composants diminuant la viscosité.

4. Procédé selon l'une quelconque des revendications 1 à 3, dans lequel au moins un des composants du bitume comprend un modificateur qui ne réduit pratiquement pas la viscosité du bitume.

5. Procédé selon la revendication 4, dans lequel ledit au moins un des composants du bitume est un bitume modifié par polymères.

6. Procédé selon la revendication 4, dans lequel on utilise un modificateur qui modifie l'élasticité du matériau à revêtement bitumeux sans diminuer significativement la viscosité dudit matériau à revêtement bitumeux.

7. Procédé selon la revendication 6, dans lequel le modificateur est un caoutchouc naturel ou synthétique.

8. Procédé selon l'une quelconque des revendications 1 à 7, dans lequel au moins un des corps de particules d'agrégat grossier et de particules d'agrégat fin est revêtu en étant mélangé à du bitume chaud.

9. Procédé selon la revendication 8, dans lequel les deux corps de particules d'agrégat grossier et de particules d'agrégat fin sont revêtus en étant mélangés à du bitume chaud.

10. Procédé selon la revendication 9, dans lequel ladite émulsion bitumeuse à rupture lente a un indice de rupture supérieur à 140.

11. Procédé selon la revendication 10, dans lequel ladite émulsion bitumeuse à rupture lente a un indice de rupture allant de 160 à 180.

12. Procédé selon l'une quelconque des revendications 1 à 11, dans lequel on utilise de 3 à 9% en poids d'émulsion bitumeuse à rupture lente dans le mélange final.

13. Procédé selon la revendication 12, dans lequel on utilise 4 à 8% en poids d'une émulsion bitumeuse qui contient environ 60 à 65% en poids de bitume.
